Europäisches Patentamt

European Patent Office

Office européen des brevets

(11) Publication number: **0 047 138**
**B1**

# EUROPEAN PATENT SPECIFICATION

(45) Date of publication of patent specification: **27.01.88**

(51) Int. Cl.⁴: **A 01 K 61/00**

(21) Application number: **81303920.3**

(22) Date of filing: **27.08.81**

(54) **Process and apparatus for fish growth acceleration.**

(30) Priority: **27.08.80 US 181831**

(43) Date of publication of application:
**10.03.82 Bulletin 82/10**

(45) Publication of the grant of the patent:
**27.01.88 Bulletin 88/04**

(84) Designated Contracting States:
**CH GB LI NL SE**

(56) References cited:
**EP-A-0 022 650**
**WO-A-81/00953**
**AU-A-6 198 973**
**CH-A- 270 487**
**US-A-3 626 901**
**US-A-3 998 186**

(73) Proprietor: **KR ASSOCIATES, INC.**
**1 Maple Street**
**Concord New Hampshire (US)**

(72) Inventor: **Rines, Robert Harvey**
**13 Spaulding Street**
**Concord New Hampshire 03301 (US)**
Inventor: **Knowles, Albert Henry**
**Westbrook Moniak Bridge by Kirkhill**
**Inverness-shire Scotland (GB)**

(74) Representative: **Allsop, John Rowland et al**
**Rowland Allsop & Co. Black Boy Yard 15 High**
**Street**
**West Wycombe High Wycombe, Bucks. HP14**
**3AE (GB)**

EP 0 047 138 B1

Courier Press, Leamington Spa, England.

## Description

The present invention relates to improvements in water-contacting covers or related light-blocking apparatus for accelerating fish growth, such as of salmonoids and other fish, being more particularly, though not exclusively directed to uses in the larger-size land-based pools or ponds, or sea cages that serve as in situ pools or ponds.

The phenomenon of accelerating fish growth through providing dark rest areas under light-blocking water-contacting covers (floating or submerged) in which the fish may stack, and from which they may observe and momentarily dart out for circulating feed in illuminated regions (preferably extended illumination over 24 hours or so) bordering the dark areas, and wherein they have been found to feed without agitation, competition and disfiguring one another, and with remarkably increased growth over, and in greater densities than obtainable with, equivalent ponds, pools or cages not provided with such water-contacting covers, is described in EP—A— 0 022 650. As an illustration, salmon parr in ponds so equipped have attained over 100% weight growth increase over a 12-month period over equivalent ponds not so equipped, and with at least a doubling of density of fish in the same pond.

While this system has been found to work admirably well both in fresh water and salt water pools or ponds (where these terms are generically used to embrace also sea-net cages bordered at the surface with exposed or floating walkways or the like), it is sometimes awkward and expensive to construct and to handle and use large-size covers for the larger pools or ponds or cages, (say 10 metres in cross dimension or greater), even if provided with hinged or separable connections.

It is to this problem that the present invention is accordingly directed. In this connection, for additional related prior art, reference may also be had to Australian Patent 61989/73 which discloses a process for the cultivation of fish in tanks or ponds in which floating rings retain coverings formed of floating beads and the spaces between the rings are left free of beads.

An object of the invention therefore is to provide a new and improved process and apparatus for enabling the effective use of pluralities of relatively small covers in large contained water volumes of such pools, ponds or cages and the like.

A further object is to provide an improved water-contacting cover apparatus particularly useful in sea cages and the like where rough water, icing and other deletereous environmental factors may be present at times.

According to one aspect of the invention there is provided, a process for accelerating the growth of fish in a contained water volume bounded by a border at least at the surface of the water comprising populating the volume with fish, providing a plurality of covers in contact with the water surface under which the fish can rest in darkness in the water volume, characterised in that the covers are disposed so as to provide a peripheral uncovered region between the covers and the border of the contained water volume, circulating water around said peripheral uncovered region in said volume while applying feed thereto, whereby the said uncovered region exposes feed circulating past the edges of the covers, through said volume to the fish stacked under the covers.

According to another aspect of the invention there is provided, apparatus for accelerating the growth rate of fish comprising a contained water volume bounded by a border for populating with fish, a plurality of covers in contact with the water surface under which fish can rest in darkness, characterised in that the covers are disposed so as to provide an uncovered peripheral region between the covers and the border of the contained water volume, means for providing a circulation of water around the said region, and means for supplying feed to the circulating water in the said region, whereby the said region exposes feed circulating past the edges of the covers through said volume to the fish stacked under the covers.

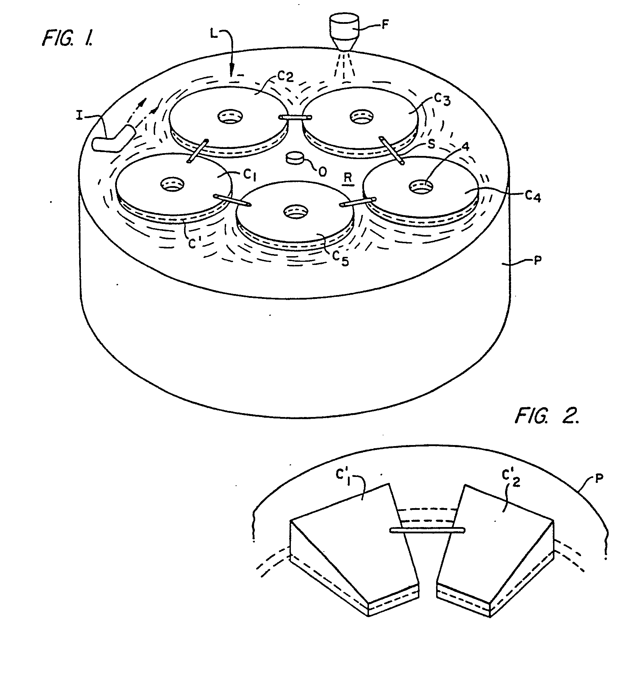

The invention will now be described in connection with the accompanying drawings, Fig. 1 of which is an isometric view of a preferred embodiment, operating in accordance with the process of the invention; and

Fig. 2 is a fragmentary view similar to Fig. 1 of a modified structure;

Referring to Fig. 1, a circular pond P, say of about 7 to 10 meters in diameter cross-section, or greater, is shown provided with a plurality (illustrated as five) of similar light-blocking (such as opaque fiberglass, for example) floating covers $C_1$—$C_5$, of generally convex circular type, the peripheral lip edges of which contact the water surface and create the before-mentioned dark, shadow stacking and rest areas thereunder. Inlet water is ejected at angles, as shown at I, to circulate the same around the pond P, exiting at a center generally filtered pipe O, and circulating feed as it drops under gravitational influence from a periodically operated, conventional solenoid shutter control feeder generally shown at F. The feed is observable in the illuminated regions beyond the cover edges (preferably with 24-hour or other extended illumination downwardly directed, as at L), by the fish resting in stacks in the successive dark areas under each of the successively laterally disposed covers $C_1$ through $C_5$. The covers themselves are successively positioned, as by successive straps S, to extend in fixed relative position along the border walls of the pond P, and inwardly therefrom, but somewhat spaced therefrom, as illustrated, to provide illuminated regions along preferably the total periphery of the covers. In addition, the surface tension and water-guiding effect of the cover lips (preferably provided with an inner float-supporting ring as of foam polyurethane or the like, generally indicated at $C^1$), causes deflecting or the circulating of the water current established by the inlet I between the successive spaced covers, as shown by the whirl lines in the drawing, carrying feed therebetween and between the covers and the pool border and serving also to hold the feed up a substantial time before gravity finally takes over.

The convex upper surface of each of the floating covers provides thereunder a varying-dimension air space, increasing towards the center, to assist in keeping the cover clean and enabling fish that may jump out onto the top of the cover, to roll back into the water.

The covers $C_1$—$C_5$ that extend along the inner periphery of the circular pool border are also shown provided with internal lipped smaller-diameter central aperatures 4 also contacting the water, and useful as additional illuminated feed regions, but also to enable the individual covers also to be handled and used in smaller ponds where the outlet pipe may extend through such apertures. A further feature of the invention is the relatively still region R of the pond that results from the above construction, as distinguished from the faster circulating region adjacent the pool border walls, and which has been found to keep the feed suspended and promote active feeding as the fish, resting in dark stacks under the covers, dart radially inward to the more quiet illuminated region R and then return to their original positions in the dark resting area under the cover from which they originated. Increasing feeding without agitation has been found to result, as before stated. If desired, moreover, a larger space may be provided between the adjacent covers at the inlet I to accommodate the initial circulating action; but in any event, the spacing from covers to the pool border walls and from cover to cover are preferably small compared with the cover dimensions — indeed, a small fraction thereof.

As an example, salmon parr near the smolt condition, disposed in a 20-foot (6 meters) pond P, with five covers $C_1$—$C_5$, as shown, each about $6\frac{1}{2}$ feet (2 meters) in outer diameter and spaced about 8″ (20.3 cms) from the pool border and from each other, were found, on the average, to weigh up to ten percent more than their counterparts in a similar uncovered pond in only about three weeks in the open, in northern Scotland (May).

Other shapes, including square, rectangular and other polygonic and curved forms of covers may be used, depending upon the application: Fig. 2 illustrating, for example, substantially trapezoidal polygonic contour constructions $C^1_1$, $C^1_2$, etc. floating spaced slightly from the pool border and from each other. The construction is tapered (shown from outer to inner edge of the covers) to provide an increasing air space under and across each of the plurality of floating covers from center towards the pool border, and again an inclined upper outer surface for tumbling fish that may have jumped thereupon, back into the pool.

The above and related constructions are well adapted for use both in land-based and water or sea-based contained volumes, the latter usually being contained by nets hung from a surface floating or exposed walkway border and usually referred to as cages, as before mentioned. In connection with such sea cage volumes, where storms, icing and other deletereous environmental factors may come into play, other forms of pluralities of covers — preferably of soft resilient material as of butyl rubber or the like (to avoid fish damage).

Further modifications will also occur to those skilled in this art and such are considered to fall within the scope of the invention as defined in the appended claims.

## Claims

1. A process for accelerating the growth of fish in a contained water volume bounded by a border at least at the surface of the water comprising populating the volume with fish, providing a plurality of covers in contact with the water surface under which the fish can rest in darkness in the water volume, characterised in that the covers ($C_1$ to $C_5$) are disposed so as to provide a peripheral uncovered region between the covers ($C_1$ to $C_5$) and the border of the contained water volume (P), circulating water around said peripheral uncovered region in said volume (P) while applying feed thereto, whereby the said uncovered region exposes feed circulating past the edges of the covers, through said volume (P) to the fish stacked under the covers ($C_1$ to $C_5$).

2. A process as claimed in claim 1 characterised in that the spaces between the covers ($C_1$ to $C_5$) and the border are small compared with the dimension of the or each cover ($C_1$ to $C_5$).

3. A process as claimed in claim 1 and characterised in that the spaces between the covers ($C_1$ to $C_5$) are small compared with the dimension of the or each cover ($C_1$ to $C_5$).

4. A process as claimed in any preceding claim characterised in that the edges of the covers ($C_1$ to $C_5$) contact the water to cause deflection of the circulating water current, carrying the feed into the spaces between the covers ($C_1$ to $C_5$) and the borders.

5. A process as claimed in any preceding claim characterised in that the covers ($C_1$ to $C_5$) are held in fixed relative positional relationship.

6. A process as claimed in any preceding claim characterised in that the covers ($C_1$ to $C_5$) are of substantially circular contour and float on lips contacting the water surface.

7. A process as claimed in claim 6 characterised in that the covers ($C_1$ to $C_5$) are provided with internal central apertures (4) defined by lips contacting the water and of cross-dimension small compared with that of the covers ($C_1$ to $C_5$).

8. A process as claimed in claim 2 and characterised in that the covers ($C_1$ to $C_5$) are of substantially trapezoidal contour ($C_1^1$ to $C_2^1$) floating on peripheral lips contacting the water surface.

9. A process as claimed in claim 1 characterised in that the underside of the covers ($C_1$ to $C_5$)

contains an air space above the water surface to assist in keeping them clean.

10. A process as claimed in claim 9 characterised in that the air space is of varying dimensions between the edges of the covers ($C_1$ to $C_5$).

11. A process as claimed in claim 9 characterised in that the lips are of varying height between opposing edges of the covers ($C_1$ to $C_5$) to provide an air space of increasing dimensions therebetween and to provide an outer inclined cover to roll fish back into the pool.

12. A process as claimed in claim 6 characterised in that the covers ($C_1$ to $C_5$) are of substantially convex contour.

13. A process as claimed in claim 1 characterised in that said covers ($C_1$ to $C_5$) extend submerged under the water surface between the borders.

14. Apparatus for accelerating the growth rate of fish comprising a contained water volume bounded by a border for populating with fish, a plurality of covers in contact with the water surface under which the fish can rest in darkness, characterised in that the covers ($C_1$ to $C_5$) are disposed so as to provide an uncovered peripheral region between the covers and the border of the water contained volume (P), means (I) for providing a circulation of water around the said region, and means (F) for supplying feed to the circulating water in the said region, whereby the said region exposes feed circulatory past the edges of the covers ($C_1$ to $C_5$) through said volume (P) to the fish stacked under the covers ($C_1$ to $C_5$).

15. Apparatus as claimed in claim 16 characterised in that the spaces from said border and the spaces between successive covers ($C_1$ to $C_5$) are small compared with the cover dimensions.

16. Apparatus as claimed in claim 14 characterised in that the covers ($C_1$ to $C_5$) are of substantially circular contour with respective lips floating each cover of the array of covers ($C_1$ to $C_5$) on the water surface.

17. Apparatus as claimed in claim 14 characterised in that the covers ($C_1$ to $C_5$) are of polygon contour with lips floating the covers ($C_1$ to $C_5$) on the water surface.

18. Apparatus as claimed in claim 17 characterised in that the covers ($C_1$ to $C_5$) are of substantially trapezoidal shape with an increasing air space thereunder across a respective cover thereof.

19. Apparatus as claimed in claim 14 characterised in that the covers ($C_1$ to $C_5$) extend substantially along a curved line, including within a circle.

20. Apparatus as claimed in claim 14 characterised in that the covers ($C_1$ to $C_5$) extend substantially along a substantially straight line including within a rectangle or square.

21. Apparatus as claimed in any one of claims 14 to 20 characterised in that said volume (P) is substantially rectangular or square and the covers ($C_1$ to $C_5$) extend along the inner periphery thereof.

## Patentansprüche

1. Verfahren zur Beschleunigung des Wachstums von Fischen in einem begrenzten, von den Fischen bevölkerten Wasservolumen, welches zumindest an der Oberfläche durch eine Begrenzung umgeben ist, wobei in Kontakt mit der Wasseroberfläche eine Vielzahl von Abdeckungen vorgesehen werden, unter denen die Fische im Wasservolumen im Dunkeln ausruhen können, dadurch gekennzeichnet, daß die Abdeckungen (C1—C5) so angeordnet werden, daß eine nicht abgedeckte Umfangszone zwischen den Abdeckungen (C1—C5) und der Begrenzung des begrenzten Wasservolumens (P) erhalten wird, und daß das Wasser um diese nicht abgedeckte Umfangszone des Wasservolumens (P) während einer Futterabgabe an das Wasservolumen zirkuliert wird, wodurch die nicht abgedeckte Umfangszone eine Futterzirkulation an den Rändern der Abdeckungen vorbei durch das Wasservolumen (P) an die unter den Abdeckungen (C1—C5) stehenden Fische erzeugt.

2. Verfahren nach Anspruch 1, dadurch gekennzeichnet, daß die Abstände zwischen den Abdeckungen (C1—C5) und der Begrenzung im Vergleich zu den Abmessungen der bzw. jeder Abdeckung (C1—C5) klein sind.

3. Verfahren nach Anspruch 1, dadurch gekennzeichnet, daß die Abstände zwischen den Abdeckungen (C1—C5) im Vergleich zu der Abmessung der oder jeder Abdeckung (C1—C5) klein sind.

4. Verfahren nach einem der vorhergehenden Ansprüche, dadurch gekennzeichnet, daß die Ränder der Abdeckungen (C1—C5) das Wasser berühren, um eine Umlenkung des zirkulierenden Wasserstromes zu bewirken, der das Futter in die Bereiche zwischen den Abdeckungen (C1—C5) und den Begrenzungen mitführt.

5. Verfahren nach einem der vorhergehenden Ansprüche, dadurch gekennzeichnet, daß die Abdeckungen (C1—C5) in fester Position relativ zueinander gehalten sind.

6. Verfahren nach einem der vorhergehenden Ansprüche, dadurch gekennzeichnet, daß die Abdeckungen (C1—C5) eine im wesentliche kreisförmige Ausbildung aufweisen und an die Wasseroberfläche berührenden Lippen schwimmen.

7. Verfahren nach Anspruch 6, dadurch gekennzeichnet, daß die Abdeckungen (C1—C5) mit inneren, zentralen Öffnungen (4) versehen sind, die das Wasser berührende Lippen aufweisen sowie im Vergleich zu den Abdeckungen (C1—C5) kleine Querschnittsabmessungen besitzen.

8. Verfahren nach Anspruch 2, dadurch gekennzeichnet, daß die Abdeckungen (C1—C5) im wesentlichen trapezförmig (C1', C2') ausgebildet sind und an die Wasseroberfläche berührenden Lippen schwimmen.

9. Verfahren nach Anspruch 1, dadurch gekennzeichnet, daß die Unterseite der Abdeckungen (C1—C5) einen Luftraum oder -Spalt über der Wasseroberfläche aufweist, um diese Abdeckungen sauber zu halten.

10. Verfahren nach Anspruch 9, dadurch gekennzeichnet, daß sich die Abmessungen des Luftraumes zwischen den Rändern der Abdeckungen (C1—C5) verändert.

11. Verfahren nach Anspruch 9, dadurch gekennzeichnet, daß die Lippen eine sich ändernde Höhe zwischen einander gegenüber liegenden Rändern der Abdeckungen (C1—C5) aufweisen, um einen Luftraum mit zunehmender Größe zwischen diesen Rändern und um eine äußere, schräge Abdeckung zum Zurückrollen der Fische in den Behälter zu erhalten.

12. Verfahren nach Anspruch 6, dadurch gekennzeichnet, daß die Abdeckungen (C1—C5) im wesentlichen eine konvexe Form besitzen.

13. Verfahren nach Anspruch 1, dadurch gekennzeichnet, daß die Abdeckungen (C1—C5) sich unter die Wasseroberfläche zwischen den Begrenzungen erstrecken.

14. Vorrichtung zur Beschleunigung des Wachstums von Fischen, mit einem durch eine Begrenzung begrenzten Wasservolumen zur Aufnahme der Fische sowie mit einer Vielzahl von in Kontakt mit der Wasseroberfläche stehenden Abdeckungen, unter denen die Fische im Dunkeln ausruhen können, dadurch gekennzeichnet, daß die Abdeckungen (C1—C5) so angeordnet sind, daß sie eine nicht abgedeckte Umfangszone zwischen den Abdeckungen und der Begrenzung des begrenzten Wasservolumens (P) bilden, das Mittel (I) vorgesehen sind, um eine Wasserzirkulation um die erwähnte Zone zu erzeugen, und daß Mittel (F) zum Zuführen von Futter an das zirkulierende Wasser in der erwähnten Zone vorgesehen sind, wodurch die erwähnte Zone eine Futterzirkulation an den Rändern der Abdeckungen (C1—C5) vorbei durch das Wasservolumen (P) an die unter den Abdeckungen (C1—C5) stehenden Fische erzeugt.

15. Vorrichtung nach Anspruch 16, dadurch gekennzeichnet, daß die Abstände von der Begrenzung und die Abstände zwischen aufeinander folgenden Abdeckungen (C1—C5) im Vergleich zu den Abmessungen der Abdeckungen klein sind.

16. Vorrichtung nach Anspruch 14, dadurch gekennzeichnet, daß die Abdeckungen (C1—C5) im wesentlichen kreisförmig mit Lippen ausgebildet sind, die jede Abdeckung der Anordnung von Abdeckungen (C1—C5) schwimmend auf der Wasseroberfläche halten.

17. Vorrichtung nach Anspruch 14, dadurch gekennzeichnet, daß die Abdeckungen (C1—C5) eine polygonartige Form mit Lippen aufweisen, die die Abdeckungen (C1—C5) schwimmend auf der Wasseroberfläche halten.

18. Vorrichtung nach Anspruch 17, dadurch gekennzeichnet, daß die Abdeckungen (C1—C5) im wesentlichen trapezförmig geformt sind, und zwar mit einem Luftspalt unter der jeweiligen Abdeckung, der sich entlang der Abdeckung vergrößert.

19. Vorrichtung nach Anspruch 14, dadurch gekennzeichnet, daß die Abdeckungen (C1—C5) sich im wesentlichen entlang einer gekrümmten Linie innerhalb eines Kreises erstrecken.

20. Vorrichtung nach Anspruch 14, dadurch gekennzeichnet, daß sich die Abdeckungen (C1—C5) im wesentlichen entlang einer im wesentlichen geradlinigen Linie innerhalb eines Rechtecks oder Quadrats erstrecken.

21. Vorrichtung nach einem der Ansprüche 14 bis 20, dadurch gekennzeichnet, daß das Wasservolumen im wesentlichen rechteckförmig oder quadratisch ist, und daß sich die Abdeckungen (C1—C5) entlang der inneren Umfangsfläche hiervon erstrecken.

## Revendications

1. Un procédé pour accélérer la croissance de poissons dans un volume d'eau fermé limité par une bordure au moins à la surface de l'eau consistant à peupler le volume de poissons, mettre un ensemble de couvercles en contact avec la surface de l'eau et sous lesquels les poissons peuvent rester dans l'obscurité dans le volume d'eau, caractérisé en ce que les couvercles ($C_1$ à $C_5$) sont disposés de manière à créer une zone périphérique découverte entre les couvercles ($C_1$ à $C_5$) et la bordure du volume d'eau fermé (P), faire circuler l'eau autour de ladite zone périphérique découverte dudit volume (P) tout en y appliquant des aliments, de sorte que ladite zone découverte expose les aliments circulant au-delà des bords des couvercles, à travers ledit volume (P), aux poissons entassés sous les couvercles ($C_1$ à $C_5$).

2. Un procédé comme revendiqué à la revendication 1, caractérisé en ce que les espaces entre les couvercles ($C_1$ à $C_5$) et la bordure sont faibles comparativement à la dimension du ou de chaque couvercle ($C_1$ à $C_5$).

3. Un procédé comme revendiqué à la revendication 1 et caractérisé en ce que les espaces entre les couvercles ($C_1$ à $C_5$) sont faibles comparativement à la dimension du ou de chaque couvercle ($C_1$ à $C_5$).

4. Un procédé comme revendiqué dans une revendication précédente quelconque, caractérisé en ce que les bords des couvercles ($C_1$ à $C_5$) viennent en contact de l'eau pour provoquer une déviation du courant de l'eau en circulation, en amenant les aliments dans les espaces entre les couvercles ($C_1$ à $C_5$) et les bordures.

5. Un procédé comme revendiqué dans une revendication précédente quelconque, caractérisé en ce que les couvercles ($C_1$ à $C_5$) sont maintenus dans une relation de position relative fixe.

6. Un procédé comme revendiqué dans une revendication précédente quelconque, caractérisé en ce que les couvercles ($C_1$) à $C_5$ sont de contour sensiblement circulaire et flottent sur des lèvres venant en contact avec la surface de l'eau.

7. Un procédé comme revendiqué à la revendication 6, caractérisé en ce que les couvercles ($C_1$ à $C_5$) présentent des ouvertures centrales internes (4) délimitées par des lèvres venant en contact avec l'eau et de faible dimension transversale comparativement à celle des couvercles ($C_1$ à $C_5$).

8. Un procédé comme revendiqué à la revendication 2 et caractérisé en ce que les couvercles

($C_1$ à $C_5$) sont de contour sensiblement trapézoïdal ($C_1^1$ à $C_2^1$) flottant sur des lèvres périphériques venant en contact avec la surface de l'eau.

9. Un procédé comme revendiqué à la revendication 1, caractérisé en ce que le dessous des couvercles ($C_1$ à $C_5$) contient un espace d'air au-dessus de la surface de l'eau pour aider à les maintenir propres.

10. Un procédé comme revendiqué à la revendication 9, caractérisé en ce que l'espace d'air est de dimension variable entre les bords des couvercles ($C_1$ à $C_5$).

11. Un procédé comme revendiqué à la revendication 9, caractérisé en ce que les lèvres sont de hauteur variable entre les bords opposés des couvercles ($C_1$ à $C_5$) pour créer un espace d'air de dimensions croissantes entre elles et pour créer un couvercle extérieur incliné afin de faire rouler les poissons et les ramener dans le bassin.

12. Un procédé comme revendiqué à la revendication 6, caractérisé en ce que les couvercles ($C_1$ à $C_5$) sont de contour sensiblement convexe.

13. Un procédé comme revendiqué à la revendication 1, caractérisé en ce que lesdits couvercles ($C_1$ à $C_5$) sont immergés sous la surface de l'eau entre les bordures.

14. Appareil pour accélérer la vitesse de croissance des poissons comprenant un volume d'eau fermé limité par une bordure pour la population de poissons, un ensemble de couvercles en contact avec la surface de l'eau et sous lesquels les poissons peuvent rester dans l'obscurité, caractérisé en ce que les couvercles ($C_1$ à $C_5$) sont disposés de manière à créer une zone périphérique découverte entre les couvercles et la bordure du volume d'eau fermé (P), des moyens (I) pour assurer une circulation d'eau autour de ladite zone, et des moyens (F) pour amener des aliments dans l'eau circulant dans ladite zone, de sorte que ladite zone expose les aliments circulant au-delà des bords des couvercles ($C_1$ à $C_5$), à travers ledit volume (P), aux poissons entassés sous les couvercles ($C_1$ à $C_5$).

15. Appareil comme revendiqué à la revendication 16, caractérisé en ce que les espaces depuis ladite bordure et les espaces entre les couvercles successifs ($C_1$ à $C_5$) sont faibles comparativement aux dimensions des couvercles.

16. Appareil comme revendiqué à la revendication 14, caractérisé en ce que les couvercles ($C_1$ à $C_5$) sont de contour sensiblement circulaire avec des lèvres respectives faisant flotter chaque couvercle du réseau de couvercles ($C_1$ à $C_5$) sur la surface de l'eau.

17. Appareil comme revendiqué à la revendication 14, caractérisé en ce que les couvercles ($C_1$ à $C_5$) sont de contour polygonal avec des lèvres faisant flotter les couvercles ($C_1$ à $C_5$) sur la surface de l'eau.

18. Appareil comme revendiqué à la revendication 17, caractérisé en ce que les couvercles ($C_1$ à $C_5$) sont de forme sensiblement trapézoïdale avec un espace d'air croissant en dessous transversalement à chaque couvercle respectif.

19. Appareil comme revendiqué à la revendication 14, caractérisé en ce que les couvercles ($C_1$ à $C_5$) s'étendent sensiblement le long d'une ligne courbe, y compris à l'intérieur d'un cercle.

20. Appareil comme revendiqué à la revendication 14, caractérisé en ce que les couvercles ($C_1$ à $C_5$) s'étendent sensiblement le long d'une ligne approximativement droite, y compris à l'intérieur d'un rectangle ou d'un carré.

21. Appareil comme revendiqué dans l'une quelconque des revendications 14 à 20, caractérisé en ce que ledit volume (P) est sensiblement rectangulaire ou carré et en ce que les couvercles ($C_1$ à $C_5$) s'étendent le long de sa périphérie intérieure.

0 047 138

FIG. 1.

FIG. 2.